# EUROPEAN PATENT SPECIFICATION

(11) **EP 3 319 091 B1**
(45) Date of publication and mention of the grant of the patent: **05.01.2022**
(21) Application number: 17208066.5
(22) Date of filing: 01.11.2010
(51) Int. Cl.: H01B 9/02, E21B 17/00, F16L 53/00

(54) **DEH PIGGYBACK CABLE**
DEH-HUCKEPACKKABEL
CÂBLE DE CHAUFFAGE ÉLECTRIQUE DIRECT SUPERPOSABLE

(30) Priority: 30.10.2009 NO 20093260
(43) Date of publication of application: 09.05.2018
(62) Divisional of application: 10830245.6
(73) Proprietor: Aker Solutions AS, 1325 Lysaker (NO)
(72) Inventor: FJELLNER, Arve, 3060 Svelvik (NO); HEGGDAL, Ole A., 1475 Finstadjordet (NO)
(74) Representative: Protector IP AS

(56) References cited:
- WO-A1-2009/128725
- JP-A- 2007 073 519
- NO-B1- 320 972
- NO-B1- 323 941
- US-A- 6 046 404
- US-A1- 2007 044 992
- US-B1- 6 417 457
- HVIDSTEN S ET AL: "HV cable design applicable for direct electrical heating of very long flowlines", OCEANS '04. MTTS/IEEE TECHNO-OCEAN '04 KOBE, JAPAN NOV. 9-12, 2004, PISCATAWAY, NJ, USA,IEEE, vol. 1, 9 November 2004 (2004-11-09), pages 257-263, XP010776578, DOI: 10.1109/OCEANS.2004.1402926 ISBN: 978-0-7803-8669-3

## Description

The present invention relates to a direct electric heating, DEH cable for use as a piggyback cable comprising a power cable to transfer large amount of electric energy/power, a set of elongate profile elements having apertures holes or slits for receipt of seawater, said elongate profile elements being arrange in a twisted bundle around the power cable, and a protective sheath that encapsulates the high power cable and the profile elements.

Initially, the basis for the present invention, was to arrive at a mechanically protected power cable which was especially prepared as a DEH cable (Direct Electric Heating) and designed to be deployed into the sea. Such DEH cables are used to heat pipelines transporting produced hydrocarbons in order to prevent hydratization. The DEH cable is strapped securely to the pipeline, a so-called "Piggyback" solution. The DEH cable constitutes one of the conductors and the pipeline itself constitutes the other conductor in the heating system. Such a heating system is disclosed and described in closer detail in NO 323516.

It is a well-known matter that when alternating current (AC) is supplied in a conductor, capacitance between the metallic conductor and the environment (remote ground) will arise. The capacitive AC current that arises is called charging currents.

Traditionally, such high voltage power cables have been designed with cable armoring and cable mantles, or what is called a screen. The screen is present to take care of and drain away the capacitive currents that arise when these high voltage cables are in operation and transfer large amounts of electric energy/power. This is now solved in a different way and is developed in connection with existing high-power umbilical. The existing high-power umbilical inherently have the above mentioned mechanical protection, namely as a filler material in the form of stiff, elongate plastic elements/profile elements.

Why a need to solve the screening in a different way exists, is inter alia reasoned as follows. For a cable extending from the seabed and up to a floating vessel, the cable needs to pass through a dynamic zone, normally in the sea surface area. A cable that operates in the dynamic zone is imparted undesired movements (by waves, wind, currents, etc.) that over time give rise to fatigue, and particularly in the mentioned cable mantle which is designed to take care of the capacitive currents. When the cable is of heavy gauge, and the mantle is located far from the center line of the cable, the mantle in particular is subjected to fatigue damage and subsequent rupture in the dynamic zone. Thus, it has been greatly desired to find a replacement for this cable mantling, which normally has been a thick foil of copper or other suitable metallic material. US2007044992 relates to a direct electric heating cable with a power cable, insulation layer and a sheath with armoring fibers surrounded by semiconducting material. The publication however fails to disclose a piggyback that has improved impact protection together with increased efficiency of the DEH cable.

Publication JP2007073519 shows a 3-core power cable using semiconducting material. There is however no disclosure of a semi-conductive outer sheet or any draining of the capacitive currents to the sea or a protection around the power cable.

The publication discloses a metal conductor around each of the power cables which makes it unsuitable for use as a piggyback cable as this would make the piggyback cable far too inefficient.

In some way or another, the capacitive currents that occur within the sea cables have to be drained off to the surrounding seawater in order to limit axial capacitive currents through the transverse cross section of the cable and the voltage built up along the outer sheath.

Surprisingly it has turned out that the described profile elements and the outer sheath of the umbilical can be made of a material that has good semiconducting properties and can be taken in use with the present power umbilical. Together with seawater in the cross section, they will together conduct current along the umbilical.

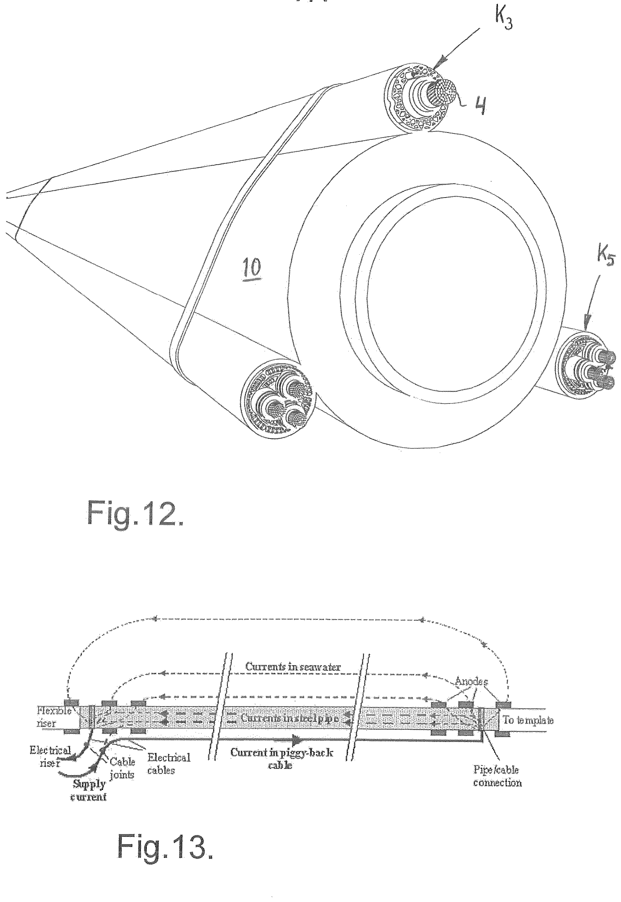

Transfer of current between the pipe and the seawater takes place via anodes and the current in the seawater flows in parallel with the pipe. The length of the transfer zone is given by physical laws and is normally 50m for 60Hz application. See fig. 13. Complex electromagnetic calculations are necessary in order to determine the current distribution between the pipe and the seawater. These calculations are connected to physical laws as "neighboring effect" and "skin effect".

Thus, according to the present invention, a direct electric heating cable according to claim 1 is provided.

Preferable embodiments of the DEH cable are defined in the dependent claims, to which reference is made.

It is, however, to be mentioned that the power umbilical according to the present invention can be supplied in many variants and embodiments that are especially adapted to the specific field of use of the umbilical. The common denominator for them all is that they need to have good ability to dissipate or drain away capacitive currents without the use of a metallic screen, as traditionally done. This good ability to drain away capacitive currents takes place, inter alia, through the use of the extruded profile elements that both have the good capacity to create mechanical protection for a current transferring cable and simultaneously act as a semiconductor that contribute to drain off capacitive currents.

The integrated high power umbilical can be further processed in order to increase the dissipation of capacitive currents. This primarily takes place in that radially extending channels are provided through the outer sheath of the umbilical and the hollow, extruded profile elements so that the seawater present within the profile elements and the radially extending holes, or apertures, by themselves form communication routes for drainage, or dissipation, of capacitive currents.

As a further option, one may provide a fibre optics conductor to the high power umbilical for use to monitor the condition of the high power umbilical on a continuous basis. By too excessive heat development, the fibre optics conductor will receive a temperature increase and this, in turn, provides a signal to a monitoring station that takes measures in order to stop the current.

### News and advantageous features of the cables are:

- The cable has higher efficiency than other cables due to lower energy losses
- Use of semiconductive cables in high power umbilicals (with control functions)
- Use of this cable design in dynamic high power umbilicals provides longer lifetime against fatigue
- Use of this cable design in dynamic high power umbilicals enables sturdy deep-sea solutions
- Use of elongate metallic elements in order to drain out capacitive currents along the length of the umbilical
- Use of semiconductive axial profiles in order to obtain contact between single-phase or three-phase high power cables
- Uses the profiles as additional protection for the cables and as axial armoring

### With the new cable the following are achieved:

∘ Less complicated cable
∘ Less effect loss
∘ Sturdy and impact resistant cable
∘ Less inductive loss (10-20%) in the cable
∘ Less heat generation in I-pipes (dynamic applications)
∘ Reduced umbilical diameter and weight
∘ Longer lengths without joints or splices
∘ Lower costs
∘ Simpler installation
∘ Significant improved fatigue properties
∘ Usable for all voltage intervals
∘ Cable transverse cross section up to 2000mm²
∘ Design life span 30 years

Thus, this integrated high power umbilical includes high voltage power cables without the traditional armoring and screening. Umbilicals use cables with semiconductive outer jacket only. The capacitive currents are drained out through the outer jacket of the cable and conducted out to the sea. The capacitive currents are eliminated by contact with each other along their length. Lack of contact with seawater/ground will probably result in immediate consume of and melting of the semiconductive jacket. Further, semiconductive cables omit steel armoring or screen, but having stiff, elongate plastic elements for static and dynamic applications, have never been used previously. This solution is applicable for long static cables/umbilicals and short dynamic cables/umbilicals.

The following example is present for the illustration purpose and is not a part of the invention. Integrated high power umbilical of the introductory said kind is provided, which is distinguished in that at least one of the surrounding elements, i.e. the filler material, or the sheath, is made of a semiconducting material, said semiconducting material being able to drain off, or dissipate, capacitive currents arising in the high power umbilical when the high power cable conducts large amounts of electric energy/power, and that at least one fibre optics conductor is arranged in the high power umbilical, which fibre optics conductor is able to monitor the condition of the high power umbilical on a continuous basis, wherein a temperature increase will generate a warning signal. An elongation in a fibre will provide a similar signal that the umbilical has been inflicted a curvature or damage.

The unique dynamic umbilical design makes the use of this technology possible since the cables are carefully protected by the filler material in the form of profiled elongate channel elements. Without the use of surrounding elongate plastic elements/plastic profiles, the cables will be too weak regarding installation loads and operational strain and stress. The cables have a simplified design. Mechanical protection and structural strength are transferred to the umbilical structure or design. The axial strength is carried by external load carrying elements integrated in the transverse cross section. The design will therefore not require any additional water barrier. The semiconducting materials are new, and the materials are tested with excellent results. The semiconductive materials are also waterproof up to 90°C over 20 years. Longer operations are not tested. For normal power transfer application a designed life time of 30 years is foreseen.

Thus, it is to be understood, in accordance with what is described above, that the following alternatives have come up, which are reflected in the patent claims, to conduct or direct the capacitive currents out into the sea:
- conduct the capacitive current along the cable internally of the umbilical via a metallic electric conductor
- conduct the capacitive current through the elongate plastic elements of the umbilical and outer sheath by using electric semiconductive plastic material in the plastic elements and/or sheath to drain out the currents from the inside
- make the plastic elements and the sheath open by holes and slits such that the water can transport the currents out and into the seawater
- three-phase cables are arranged in a triangle or in contact with each other or with the semiconductive plastic elements

It is to be understood that it will be possible to combine one or more of the alternatives indicated above.

Other and further objects, features and advantages will appear from the following description of preferred embodiments of the invention, which is given for the purpose of description, and given in context with the appended drawings where:
Fig. 1 shows a transverse cross-sectional view through a dynamic power umbilical according to the invention, which also is representative for different power umbilicals of this nature,
Fig. 2 shows an alternative transverse cross-sectional view through a power umbilical according to the invention, which also is representative for other power umbilicals of this nature,
Fig. 3 shows a one-conductor power umbilical which is in particular prepared as a DEH cable (Direct Electric Heating),
Fig. 4 shows a one-conductor power umbilical in similarity with that shown in fig. 3,
which also includes load carrying elements in the form of carbon fibre rods,
Fig. 5 shows a three-conductor DEH power umbilical,
Fig. 6 shows a two-conductor dynamic DEH umbilical having a large number of carbon fibre rods designed for particularly deep waters,
Fig. 7 shows a combined two-conductor dynamic DEH umbilical and six-conductor high voltage cable for subsea equipment and that includes carbon fibre rods,
Fig. 8 shows a twin-conductor dynamic DEH umbilical including weight elements,
Fig. 9 shows a "piggyback" umbilical on a production pipe,
Fig. 10 shows schematically a transverse cross section through a DEH umbilical having radial extending water channel,
Fig. 11 shows schematically current and voltage diagrams for different distances between the water channels in the longitudinal direction of the umbilical and without any fibre optics conductor present in the cross section,
Fig. 12 shows a variant of the piggyback umbilical shown in fig. 9, and
Fig. 13 shows schematically the electric current distribution in a DEH system.

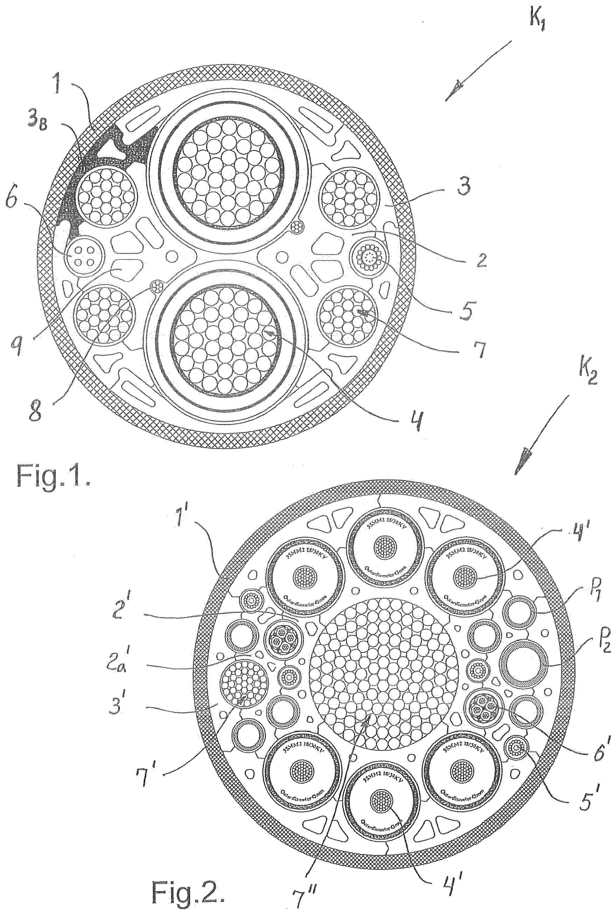

In the shown embodiment according to figure 1, the power umbilical K₁, which in general description is named K, is basically constructed of the following elements: a bundle of elongate elements consisting of inner and outer channel elements 2, 3, power cables 4 to transfer large amounts of electric power/energy, fibre optics conductors 5 and load carrying elements 7, that are laid and closed together into said bundle. In addition, a filler material 6 that balances for the fibre optics cable 5 is indicated. The laying and closing is either SZ or traditional helical laying and closing. The outer channel elements 3 can for example be made of polyvinyl chloride (PVC) and the inner channel elements 2 of semiconducting material. The PVC material needs a mix with a different substance in order to make it semiconductive, for example intermixture of carbon. The power cables 4 can have a semiconducting jacket of polyethylene. The load carrying elements 7 can be in the form of steel wires, alternatively carbon rods, which are twisted into bundles. It is further to be understood that strictly one of the channel elements 2, 3 only needs to be of semiconducting material, while the remaining channel elements 2, 3 can be made of traditional PVC. In fig. 1 the black channel element 3_{B} for example, can represent the semiconductive channel element. The fibre optics conductor 5, made up by one or more optical fibre threads or filaments, are provided to monitor temperature changes or changes in elongation of the threads and then be able to signalize errors in the umbilical K. Other suitable material can for example be PP or ABS.

In addition, in one embodiment, the power umbilical K can include at least one metallic electric conductor, in figure 1 given the reference number 8, which is arranged in the cross section of the power umbilical K and extends in the longitudinal direction of the power umbilical K. The conductor or conductors 8 are located separate from and external of the power cables 4. The at least one conductor 8 is, as mentioned, able to drain away capacitive currents that arise in the power umbilical K when the power cable 4 conducts large amounts of electric energy/power.

The laid and closed bundle can optionally be kept together and in place by a strength band. An outer sheath or jacket 1, for example of polyethylene PE, is extruded onto the bundle. Polyethylene with addition of carbon is considered as semiconductive. As mentioned the cross section can also include fluid pipes (not shown) in some embodiments or variants.

The inner and outer channel elements 2, 3 are laying at least partly around and between the electric cables 4 and are typically made as rigid, elongate, continuous elements of plastic material such as PVC. The electric cables 4, the possible wires/fibre optics conductors 5, the filler material 6 and the channel elements 2, 3 and the at least one load carrying element 7, are as mentioned alternating laid and closed, i.e. having steadily changing direction, in the entire or part of the longitudinal extension of the power umbilical, alternatively continuously helical. In addition, the laid and closed bundle is kept substantially torsional stiff by the protective sheath 1, optionally by the addition of a strength band that is helically wound around the bundle immediate inside the protective sheath 1.

As mentioned, the rigid elongate plastic elements 2, 3 can be made of semiconducting plastic material. Optionally, only the inner channel elements 2 or only the outer channel elements 3, or as mentioned only one single channel element 3_{B}, can be semi conducting. As mentioned, also the protective jacket 1 can be made of semiconductive material.

The rigid elongate profile elements 2, 3 can include longitudinally extending channels 9 that communicate with radial extending holes, slits or similar in the profile elements 2, 3 and through the protective jacket 1 such that the water that fills the channels 9 and the holes are able to transport away the capacitive currents into the surrounding sea water.

The electric power cables 4 can in turn be three-phase cables which in the cross section thereof can be arranged in a triangle, which either are in contact with each other or with the semiconducting plastic profiles 2, 3.

As an illustrating example of the dimensions in question, without thereby being limiting, the cable can have a transversal cross section of 2000 mm². Designed life time is 30 years. It is further to be understood that ordinary electric wires for control functions, can in addition possibly be included in all embodiments and variants, all according to actual needs.

Figure 2 shows a second embodiment of a power umbilical K₂, which in turn is basically constructed of the following elements: a bundle of elongate elements consisting of inner, intermediate and outer channel elements 2', 2a', 3', power cables 4' to transfer large amounts of electric power/energy, fibre optics conductors 5' and load carrying elements 7', 7", that are laid and closed together into said bundle. In addition, smaller and larger steel pipes P₁, P₂ to transfer fluids are indicated. The laying and closing is either SZ or traditional helical laying and closing. The outer channel elements 3' can for example be made of polyvinyl chloride (PVC) and the inner channel elements 2' of semiconducting material. The power cables 4' can have a semiconducting jacket of polyethylene. The load carrying elements 7', 7" can be in the form of steel wires, which are twisted into bundles. Here one load carrying element 7" is a central wire.

In addition, the power umbilical K₂ can include one or more low voltage electric wires 6', which is arranged in the cross section and extends in the longitudinal direction of the power umbilical. The low voltage wires 6' are placed separate from and external of the power cables 4'.

The bundle can optionally be kept together and in place by a strength band. An outer sheath or jacket 1', for example of polyethylene (PE), is extruded onto the bundle.

The outer, intermediate and inner channel elements 2', 2a', 3' are laying at least partly around and between the electric power cables 4' and are typically made as rigid, elongate, continuous elements of plastic material. The power cables 4', the possible wires/fibre optics conductors 5', 6', the channel elements 2', 2a', 3' and the at least one load carrying element 7', 7", are as mentioned alternating laid and closed, i.e. having steadily changing direction, in the entire or part of the longitudinal extension of the power umbilical K₂, alternatively continuously helical. In addition, the laid and closed bundle is kept substantially torsional stiff by the protective sheath 1', optionally by the addition of a strength band that is helically winded around the bundle immediate inside the protective sheath 1'.

As mentioned, the rigid elongate plastic elements 2', 2a', 3' can be made of semiconducting plastic material. Optionally, the inner channel elements 2' only, the intermediate elements 2a' only, the outer channel elements 3' only, or, as mentioned, only one single channel element can be semiconducting. Also, the protective jacket 1' can be made of semiconductive material.

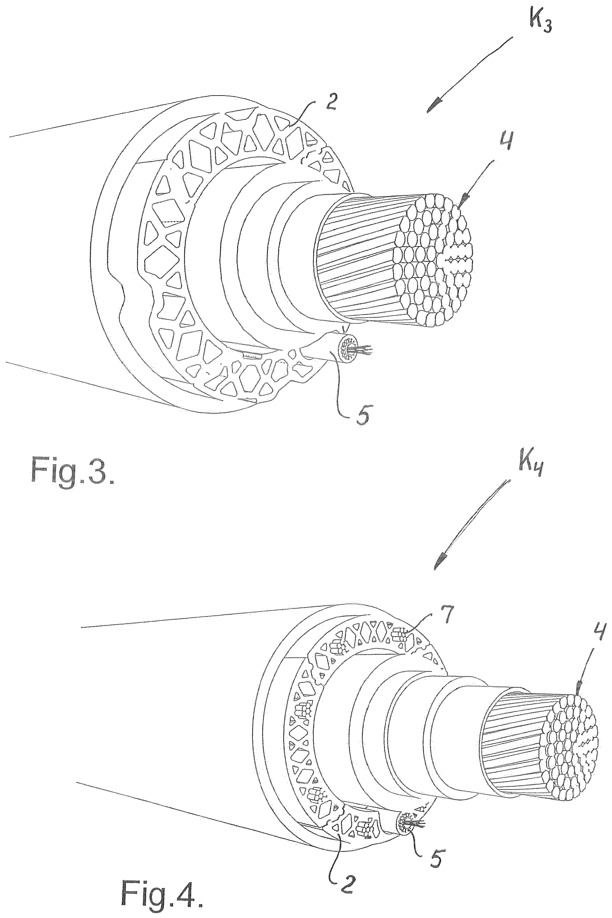

Fig. 3 shows a third and simplest embodiment of a DEH/piggyback power umbilical K₃. This is a single conductor power umbilical K₃ which is specially designed and prepared to be a DEH cable (Direct Electric Heating). The power umbilical K₃ is constructed of one single power cable 4 and a set of elongate profile elements 2 that are laid in a ring around the power cable 4. At least one of the profile elements is semiconductive. Several layers of insulation are present therebetween. However, the umbilical cannot have any metallic screen since this would influence on the inductive function of the umbilical. Also, a fibre optics conductor 5 is shown, but that is not absolutely mandatory, but may preferably be there. This is a fibre optic conductor that monitors the condition of the power umbilical K₃ and signalizes possible errors in that a temperature increase arises within the optical fibre. In a variant the at least one fibre optics element 5 can be arranged within the insulating layer itself that surrounds the power cable 4. Normally, in addition, such cable also has a magnetic connection to the pipe.

Fig. 4 shows a fourth and second simplest embodiment of a power umbilical K₄. The power umbilical K₄ is typically used during installation and repair. This is also a single conductor power umbilical K₄ which is prepared to be a DEH piggyback cable (Direct Electric Heating). The power umbilical K₄ is constructed corresponding to the power umbilical K₃, but with the addition of bundles assembled of carbon fibre rods 7 which represent load carrying elements. Axial strength is needed under retrofit installation on the seabed and during repair.

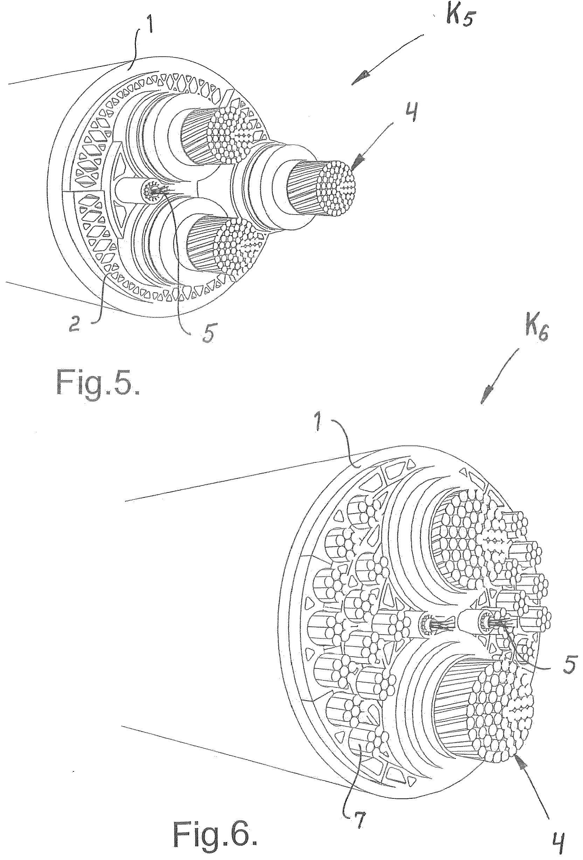

Fig. 5 shows a power umbilical K₅ in the form of a three conductor DEH power umbilical having three heavy gauge power cables 4, one or two fibre optics conductors 5, outer jacket 1 and the mentioned profile elements 2 which are adapted to this power umbilical K₅.

Fig. 6 shows a power umbilical K₆ in the form of a two conductor dynamic DEH power umbilical having two heavy gauge power cables 4, one or more fibre optics conductors 5, outer jacket 1, a great number of carbon fibre rods 7 and the mentioned profile elements 2 which are just adapted to this power umbilical K₆. The power umbilical K₆ is designed for particularly deep waters.

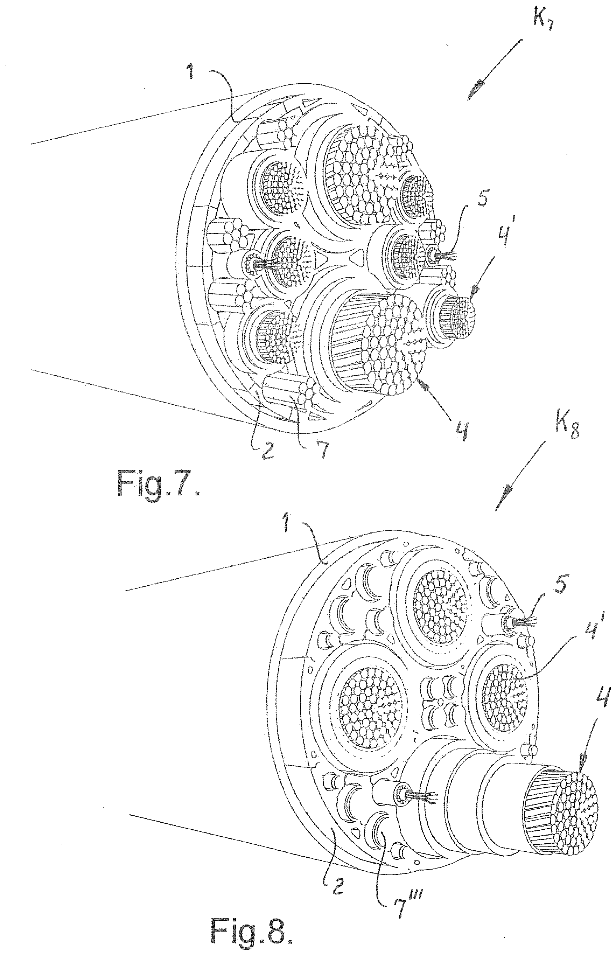

Fig. 7 shows a dynamic power umbilical K₇ in the form of a combined two conductor dynamic DEH power umbilical and six conductor high voltage cable for subsea equipment. The power umbilical K₇ includes two heavy gauge power cables 4, six high voltage cables 4', one or more fibre optics conductors 5, outer jacket 1, a great number of carbon fibre rods 7 and the mentioned profile elements 2 which are just adapted to this power umbilical K₇. The power umbilical K₇ is designed for combining a DEH function in the cable with power cables to subsea equipment such as pump stations.

Fig. 8 shows a power umbilical K₈ in the form of a twin conductor dynamic DEH power umbilical designed to be deployed in water depths less than about 1000meters. The power umbilical K₈ includes four heavy gauge power cables 4, one or more fibre optics conductors 5, outer jacket 1, a great number of weight adding steel rods 7'" having larger and smaller cross section and the mentioned profile elements 2 which are just fitted to this power umbilical K₈.

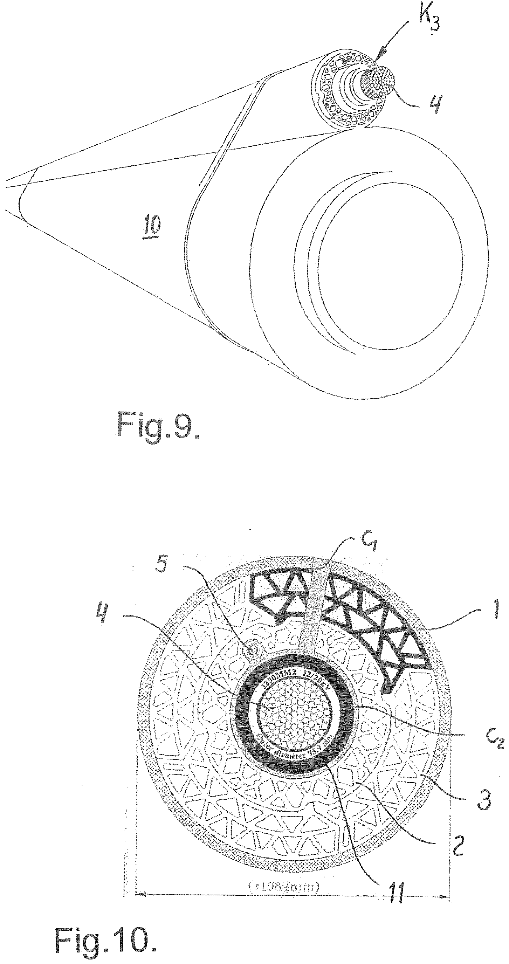

Fig. 9 shows a "piggyback" cable K₃ on a production pipe 10 in the way the cable K₃ typically is laid and strapped securely in a DEH heating system.

Fig. 10 shows schematically a section through a DEH cable where a radially extending water channel C₁ is clearly marked and shown. The water channel C₁ can be a bore, for example a 10mm hole through the outer jacket 1, the profile elements 2, 3 and in towards the power cable 4 proper. It is further shown a channel C₂ between the outer sheath 11 of the power cable 4 and the inner wall of the profile elements 3. The thickness of the channel is indicated to be 3mm, without being a limitation. Thus, a channel C₂ is arranged in the entire longitudinal direction of the cable and interrupted by radial extending channels C₁ at certain intervals. Also, a fibre optics cable 5 is indicated.

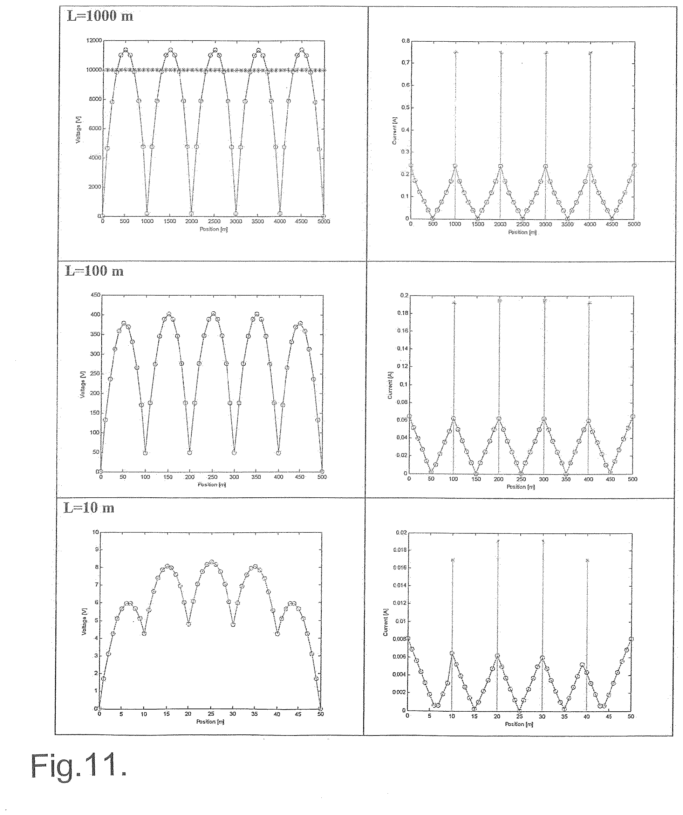

Fig. 11 shows schematically current and voltage diagrams for capacitive currents for different distances between the water channels C₁ in the longitudinal direction of the cable and without fibre optics conductor in the cross section thereof. The diagrams show the results when the water channels, or the draining holes C1, have a distance apart of 10, 100 and 1000 meters along the length of the power umbilical K. In the analysis that was conducted one observed the effect of the capacitive charging currents on the voltage built up along the outer semiconductive cable sheath 1 having 6mm thickness. A cable voltage between the conductor and ground was 10kV at 50 Hz.

Fig. 12 shows another variant of a "piggyback" cable K₃ on a production pipe 10, i.e. having three cables mounted on and strapped securely to the production pipe 10 with approximately same circumferential distance apart from each other. The cables are distributed around the circumference in order to lower the operational temperature.

Fig. 13 shows schematically the electric current distribution within a DEH system. If the heating system, i.e. the entire system of pipes, connections and cables were electrically isolated from the seawater, all current from the distributors would be conducted in the steel pipe, which means optimum power efficiency for the system. However, from a practical point of view and over the life time of the system, it is not considered possible to keep the heating system ideally isolated from the seawater. Thus, an electric error due to ageing, or damage, on the insulation by accidence, results in large consequences for the safety and the reliability of the system.

## Claims

1. A direct electrical heating, DEH cable, for use as a piggyback cable (k3, k4, k5) comprising a power cable (4) to transfer large amounts of electric energy/power,
- a set of elongate profile elements (2, 3) having apertures, holes or slits for receipt of seawater,
- said elongate profile elements (2, 3) being arranged in a twisted bundle around the power cable (4),
- a protective sheath (1) that encapsulates the power cable (4) and the elongate profile elements (2, 3), wherein the sheath (1) and at least one of the profile elements (2, 3) are semiconductive in order to, drain off to sea capacitive currents arising in the DEH cable (k3, k4, k5) when the DEH cable is deployed into the sea and the power cable (4) conducts large amounts of electric energy/power.

2. The DEH cable (k3, k4, k5) according to claim 1, wherein the at least one of the elongate profile elements (2, 3) and the protective outer sheath (1) are made of any of the materials polyethylene, PE, polyvinylchloride ,PVC, polypropylene, PP, and acrylonitrile butadiene styrene, ABS, with addition of carbon

3. The DEH cable (k3, k4, k5) according to any one of the claims 1 or 2 wherein the at least one of the elongate profile elements (2, 3) have longitudinally extending channels (C₂) for receipt of seawater, and the protective outer sheath (1) comprises substantially radially extending channels (C₁) that communicate with the longitudinally extending channels (C₂), said seawater forming communication to transport away or dissipate capacitive currents generated in the DEH cable (k3, k4, k5) when the DEH cable is deployed into the sea.

4. The DEH cable (k3, k4, k5) according to any of the claims 1-3 wherein the DEH cable comprises at least one fibre optical cable (5) arranged within the at least one elongate profile element (2, 3), said fibre optical cable (5) having one or more optical fibre threads or filaments adapted to monitor the condition of the DEH cable (k3, k4, k5) continuously and generate a warning signal in case of temperature variation or an elongation within a fibre.

5. The DEH cable (k3, k4, k5) according to claim 4, wherein the power cable (4), the elongate profile elements (2, 3) and the fibre optical cable (5) are arranged continuously helically.

6. The DEH cable (k3, k4, k5) according to any of the claims 1-5 wherein at least one load carrying element (7, 7', 7", 7"') is predetermined located in the transverse cross section of the DEH cable (k3, k4, k5), said at least one load carrying element(s) (7, 7', 7", 7"') are arranged in a SZ configuration, or alternatively arranged continuously helically.

7. The DEH cable (k3, k4, k5) according to any of the claims 1-6 wherein the DEH cable further comprises an anti-rotation band or strength band, or a tape, which is helically winded about the bundle just internal of the protective sheath (1), or alternatively the strength band, or the tape, is helically winded around the bundle in two or more layers, arranged in opposite directions.

8. The DEH cable (k3, k4, k5) according to any of the claims 6 or 7 when dependent on 6, wherein the at least one load carrying elements (7, 7', 7", 7"') is a carbon fibre rod.

9. The DEH cable (k3, k4, k5) according to claim 4, wherein the at least one fibre optical cable (5) is arranged within an insulation layer encapsulating the power cable (4).

## Patentansprüche

1. Ein direktes elektrisches Heizkabel, DEH-Kabel, zur Verwendung als Huckepackkabel (k3, k4, k5), das ein Leistungskabel (4) zur Übertragung großer Mengen an elektrischer Energie/Leistung umfasst,
- einen Satz langgestreckter Profilelemente (2, 3) mit Öffnungen, Löchern oder Schlitzen zur Aufnahme von Seewasser,
- wobei die langgestreckten Profilelemente (2, 3) in einem verdrillten Bündel um das Stromkabel (4) angeordnet sind,
- einen Schutzmantel (1), der das Stromkabel (4) und die langgestreckten Profilelemente (2, 3) umschließt,
wobei der Mantel (1) und wenigstens eines der Profilelemente (2, 3) halbleitend sind, um kapazitive Ströme, die in dem DEH-Kabel (k3, k4, k5) entstehen, ins Meer abzuleiten, wenn das DEH-Kabel im Meer ausgebracht wird und das Stromkabel (4) große Mengen an elektrischer Energie/Leistung leitet.

2. DEH-Kabel (k3, k4, k5) nach Anspruch 1, wobei das wenigstens eine langgestreckte Profilelement (2, 3) und der schützende Außenmantel (1) aus einem der Materialien Polyethylen, PE, Polyvinylchlorid ,PVC, Polypropylen, PP, und Acrylnitril-Butadien-Styrol, ABS, mit Zusatz von Kohlenstoff hergestellt sind.

3. DEH-Kabel (k3, k4, k5) nach einem der Ansprüche 1 oder 2, wobei das wenigstens eine langgestreckte Profilelement (2, 3) in Längsrichtung verlaufende Kanäle (C₂) zur Aufnahme von Seewasser aufweist, und der schützende Außenmantel (1) im Wesentlichen radial verlaufende Kanäle (C₁) umfasst, die mit den in Längsrichtung verlaufenden Kanälen (C₂) in Verbindung stehen, wobei das Meerwasser eine Verbindung bildet, um kapazitive Ströme, die in dem DEH-Kabel (k3, k4, k5) erzeugt werden, wenn das DEH-Kabel im Meer ausgebracht wird, abzutransportieren oder abzuleiten.

4. DEH-Kabel (k3, k4, k5) nach einem der Ansprüche 1 bis 3, wobei das DEH-Kabel mindestens ein faseroptisches Kabel (5) umfasst, das innerhalb des wenigstens einen langgestreckten Profilelements (2, 3) angeordnet ist, wobei das faseroptische Kabel (5) einen oder mehrere optische Faserfäden oder Filamente aufweist, die geeignet sind, den Zustand des DEH-Kabels (k3, k4, k5) kontinuierlich zu überwachen und ein Warnsignal im Falle einer Temperaturänderung oder einer Längung innerhalb einer Faser zu erzeugen.

5. DEH-Kabel (k3, k4, k5) nach Anspruch 4, wobei das Stromkabel (4), die langgestreckten Profilelemente (2, 3) und das Lichtwellenleiterkabel (5) durchgehend spiralförmig angeordnet sind.

6. DEH-Kabel (k3, k4, k5) nach einem der Ansprüche 1 bis 5, wobei wenigstens ein lasttragendes Element (7, 7', 7", 7"') im Querschnitt des DEH-Kabels (k3, k4, k5) festgelegt angeordnet ist, wobei das wenigstens eine lasttragende Element bzw. die lasttragenden Elemente (7, 7', 7", 7"') in einer SZ-Konfiguration oder alternativ durchgehend spiralförmig angeordnet sind.

7. DEH-Kabel (k3, k4, k5) nach einem der Ansprüche 1 bis 6, wobei das DEH-Kabel ferner ein Anti-Rotationsband oder Festigkeitsband oder ein Band umfasst, das schraubenförmig um das Bündel gerade innerhalb des Schutzmantels (1) gewickelt ist, oder dass alternativ das Festigkeitsband oder das Band schraubenförmig um das Bündel in zwei oder mehr Lagen gewickelt ist, die in entgegengesetzten Richtungen angeordnet sind.

8. DEH-Kabel (k3, k4, k5) nach Anspruch 6 oder nach Anspruch 7, sofern von Anspruch 6 abhängig, wobei das wenigstens eine lasttragende Element (7, 7', 7", 7"') ein Kohlefaserstab ist.

9. DEH-Kabel (k3, k4, k5) nach Anspruch 4, wobei der mindestens eine Lichtwellenleiter (5) innerhalb einer das Stromkabel (4) umhüllenden Isolierschicht angeordnet ist.

## Revendications

1. Câble de chauffage électrique direct, DEH, destiné à être utilisé en tant que câble adaptateur (k3, k4, k5) comprenant un câble d'alimentation (4) pour transférer de grandes quantités d'énergie/de puissance électrique,
- un ensemble d'éléments profilés allongés (2, 3) ayant des ouvertures, des trous ou des fentes pour recevoir de l'eau de mer,
- lesdits éléments profilés allongés (2, 3) étant agencés en un faisceau torsadé autour du câble d'alimentation (4),
- une gaine de protection (1) qui encapsule le câble d'alimentation (4) et les éléments profilés allongés (2, 3), dans lequel la gaine (1) et au moins un des éléments profilés (2, 3) sont semi-conducteurs afin de drainer vers la mer des courants capacitifs apparaissant dans le câble DEH (k3, k4, k5) lorsque le câble DEH est déployé dans la mer et le câble d'alimentation (4) conduit de grandes quantités d'énergie/de puissance électrique.

2. Câble DEH (k3, k4, k5) selon la revendication 1, dans lequel le au moins un des éléments profilés allongés (2, 3) et la gaine de protection externe (1) sont réalisés en l'un quelconque des matériaux polyéthylène, PE, polychlorure de vinyle, PVC, polypropylène, PP, et acrylonitrile-butadiène-styrène, ABS, avec addition de carbone.

3. Câble DEH (k3, k4, k5) selon l'une quelconque des revendications 1 ou 2, dans lequel le au moins un des éléments profilés allongés (2, 3) a des canaux s'étendant longitudinalement (C₂) pour recevoir de l'eau de mer, et la gaine de protection externe (1) comprend des canaux s'étendant sensiblement radialement (C₁) qui communiquent avec les canaux s'étendant longitudinalement (C₂), ladite eau de mer formant une communication pour transporter ou dissiper des courants capacitifs générés dans le câble DEH (k3, k4, k5) lorsque le câble DEH est déployé dans la mer.

4. Câble DEH (k3, k4, k5) selon l'une quelconque des revendications 1 à 3, dans lequel le câble DEH comprend au moins un câble à fibre optique (5) agencé à l'intérieur du au moins un élément profilé allongé (2, 3), ledit câble à fibre optique (5) ayant un ou plusieurs fils ou filaments de fibre optique adaptés pour surveiller l'état du câble DEH (k3, k4, k5) de manière continue et générer un signal d'avertissement en cas de variation de température ou d'allongement à l'intérieur d'une fibre.

5. Câble DEH (k3, k4, k5) selon la revendication 4, dans lequel le câble d'alimentation (4), les éléments profilés allongés (2, 3) et le câble à fibre optique (5) sont agencés de manière hélicoïdale en continu.

6. Câble DEH (k3, k4, k5) selon l'une quelconque des revendications 1 à 5, dans lequel au moins un élément porteur de charge (7, 7', 7", 7"') est prédéterminé dans la section transversale du câble DEH (k3, k4, k5), ledit au moins un élément porteur de charge (7, 7', 7", 7"') est agencé dans une configuration SZ, ou en variante agencé de manière hélicoïdale en continu.

7. Câble DEH (k3, k4, k5) selon l'une quelconque des revendications 1 à 6, dans lequel le câble DEH comprend en outre une bande anti-rotation ou une bande de résistance, ou un ruban, qui est enroulé(e) de manière hélicoïdale autour du faisceau juste à l'intérieur de la gaine de protection (1), ou en variante la bande de résistance, ou le ruban, est enroulé(e) de manière hélicoïdale autour du faisceau en deux couches ou plus, agencées dans des directions opposées.

8. Câble DEH (k3, k4, k5) selon l'une quelconque des revendications 6 ou 7 lorsqu'elles dépendent de 6, dans lequel le au moins un élément porteur de charge (7, 7', 7", 7"') est une tige de fibre de carbone.

9. Câble DEH (k3, k4, k5) selon la revendication 4, dans lequel le au moins un câble de fibre optique (5) est agencé à l'intérieur d'une couche d'isolation encapsulant le câble d'alimentation (4).
